# EUROPÄISCHE PATENTSCHRIFT

(11) **EP 2 062 836 B1**
(45) Veröffentlichungstag und Bekanntmachung des Hinweises auf die Patenterteilung: **22.07.2009**
(21) Anmeldenummer: 07022849.9
(22) Anmeldetag: 26.11.2007
(51) Int. Cl.: B65G 1/04

(54) **Verfahren zum Auslagern, Verfahren zum Einlagern und Verfahren zum Handling von Lagergut an einem Lager sowie Lageranordnungen zur Realisierung der genannten Verfahren**
Method for releasing from stock, method for placing in stock and method for handling merchandise in a warehouse and warehouse facilities for implementing the a.m. methods
Procédé de déstockage, procédé de stockage et procédé de manipulation de marchandise dans un entrepôt, et agencements de stockage pour la réalisation des procédés mentionnés

(43) Veröffentlichungstag der Anmeldung: 27.05.2009
(73) Patentinhaber: Trumpf Sachsen GmbH, 01904 Neukirch (DE)
(72) Erfinder: Busch, Marcus, 01324 Dresden (DE); Höer, Matthias, 01904 Weifa (DE)
(74) Vertreter: Kohler Schmid Möbus

(56) Entgegenhaltungen:
- DE-A1-5102004 061 27
- JP-A- 59 124 603

## Beschreibung

Die Erfindung betrifft ein Verfahren zum Auslagern von Lagergut an einem Lager,
• wobei das auszulagernde Lagergut lagerseitig und das ausgelagerte Lagergut durch ein bei Lastzunahme in Schwerkraftrichtung begrenzt nachgiebiges Auflager einer Entnahmeeinrichtung in Schwerkraftrichtung abgestützt wird und
• wobei beim Auslagern das Lagergut und das Auflager der Entnahmeeinrichtung quer zu der Schwerkraftrichtung relativ zueinander mit einer Auslagerungsbewegung bewegt werden unter Übernahme von in Schwerkraftrichtung wirksamer lagerseitiger Abstützung des Lägergutes durch das Auflager der Entnahmeeinrichtung.

Die Erfindung betrifft des Weiteren ein Verfahren zum Einlagern von Lagergut an einem Lager,
• wobei das einzulagernde Lagergut durch ein sich bei Entlastung begrenzt hebendes Auflager einer Beschickungseinrichtung und das eingelagerte Lagergut lagerseitig in Schwerkraftrichtung abgestützt wird und
• wobei beim Einlagern das Lagergut und das Auflager der Beschickungseinrichtung quer zu der Schwerkraftrichtung relativ zueinander mit einer Einla• gerungsbewegung bewegt werden unter Übernahme von in Schwerkraftrichtung wirksamer auflagerseitiger Abstützung des Lagergutes durch das Lager.

Die Erfindung betrifft außerdem ein Verfahren zum Handling von Lagergut an einem Lager, umfassend ein Verfahren zum Auslagern sowie ein Verfahren zum Einlagern von Lagergut.

Schließlich betrifft die Erfindung Lageranordnungen zur Realisierung der genannten Verfahren.

Gattungsgemäßer Stand der Technik ist bekannt aus DE 10 2004 061 275 A1. Diese Druckschrift offenbart ein Regallager mit Regalen, an welchen Lagergut mittels eines Regalbediengerätes ein- und ausgelagert wird. Zu diesem Zweck wird eine an dem Regalbediengerät vorgesehene Auflagefläche für Lagergut mittels einer Hubeinheit des Regalbediengerätes in eine Position bewegt, in welcher sie mit einer regalseitigen Lagerfläche für Lagergut fluchtet. Ein gegenseitiges Fluchten der Auflagefläche an dem Regalbediengerät und der regalseitigen Lagerfläche ist auch dann gewährleistet, wenn an dem betreffenden Regal und/oder an dem Regalbediengerät Verformungen auftreten, wie sie durch das Gewicht des betreffenden Lagergutes verursacht werden können. Bei einem gegenseitigen Fluchten der Auflagefläche an dem Regalbediengerät einerseits und der regalseitigen Lagerfläche andererseits wird das aus- ebenso wie das einzulagernde Lagergut mittels einer Ausfahreinrichtung horizontal von dem Regalbediengerät auf die betreffende regalseitige Lagerfläche oder aus dem betreffenden Regal auf die Auflagefläche an dem Regalbediengerät bewegt.

Die Funktionssicherheit des Auslagerns und/oder des Einlagerns von Lagergut an einem Lager zu erhöhen, hat sich die vorliegende Erfindung ausgehend von dem beschriebenen Stand der Technik zum Ziel gesetzt.

Erfindungsgemäß gelöst wird diese Aufgabe durch die Verfahren gemäß den Patentansprüchen 1, 3 und 5 sowie durch die Lageranordnungen gemäß den Patentansprüchen 8, 10 und 12.

Zum Auslagern von Lagergut werden im Falle der Erfindung das lagerseitig in Schwerkraftrichtung abgestützte Lagergut und das Auflager der Entnahmeeinrichtung mit einer Auslagerungsbewegung zunächst relativ zueinander in eine Position bewegt, bei welcher das lagerseitig in Schwerkraftrichtung abgestützte Lagergut von dem Auflager der Entnahmeeinrichtung teilweise untergriffen wird. Anschließend werden das Auflager der Entnahmeeinrichtung und das von dem Auflager untergriffene Lagergut gemeinsam angehoben. Dabei übernimmt das Auflager der Entnahmeeinrichtung unter Beibehaltung einer lagerseitigen Restabstützung des Lagergutes oder unter vollständiger Übernahme des Lagergutes zuvor von dem Lager bewirkte Abstützung des Lagergutes in Schwerkraftrichtung. Die Auslagerungsbewegung wird bei auflagerseitiger Abstützung des Lagergutes fortgesetzt.

Durch die erfindungsgemäße Hubbewegung wird verhindert, dass sich das Auflager der Entnahmeeinrichtung bei der im Laufe des Auslagerungsvorganges erforderlichen teilweisen oder vollständigen Übernahme der Abstützung des Lagergutes in Schwerkraftrichtung gegenüber seiner zuvor eingenommenen Höhenlage lastbedingt absenkt. Derartige lastbedingte Absenkbewegungen des Auflagers der Entnahmeeinrichtung würden erfahrungsgemäß schlagartig erfolgen. Damit verbunden wären gleichfalls schlagartige Bewegungen des Lagergutes. Im Gegensatz hierzu gestattet das erfindungsgemäße Verfahren einen schonenden und somit die Funktionssicherheit des Auslagerungsvorganges gewährleistenden Übergang des Lagergutes von dem betreffenden Regal auf das Auflager der Entnahmeeinrichtung. Ist als Lagergut beispielsweise eine Palette mit darauf gestapelten Blechen auszulagern, so ist sichergestellt, dass beim Transfer der Palette von dem Lager auf das Auflager der Entnahmeeinrichtung keine nennenswerten Erschütterungen der Palette bzw. des auf dieser abgelegten Blechstapels auftreten. Die Bleche des Blechstapels können während des Auslagerungsvorganges folglich ihre Lage beibehalten, ohne dass etwa eine unerwünschte gegenseitige Verschiebung von Blechen zu befürchten wäre.

Entsprechend funktionssicher gestaltet sich im Falle der Erfindung das Einlagern von Lagergut. Zu diesem Zweck werden das an dem Auflager der erfindungsgemäßen Beschickungseinrichtung in Schwerkraftrichtung abgestützte Lagergut und das genannte Auflager mit einer Einlagerungsbewegung relativ zueinander in eine Position überführt, bei welcher das auflagerseitig in Schwerkraftrichtung abgestützt Lagergut teilweise von dem Lager untergriffen wird. Anschließend werden das Auflager der Beschickungseinrichtung und das Lagergut gemeinsam abgesenkt. Infolgedessen wird die zuvor auflagerseitig bewirkte Abstützung des Lagergutes in Schwerkraftrichtung teilweise oder vollständig durch das Lager übernommen. Die Einlagerungsbewegung wird bei zumindest teilweise auflagerseitiger Abstützung des Lagergutes fortgesetzt. Durch die erfindungsgemäße Absenkbewegung des Auflagers der Beschickungseinrichtung wird verhindert, dass das Auflager der Beschickungseinrichtung aufgrund seiner mit der teilweisen oder vollständigen Übernahme des Lagergutes durch das Lager verbundenen Entlastung eine schlagartige Hubbewegung ausführt, infolge derer das von dem Auflager der Beschickungseinrichtung nach wie vor gelagerte Lagergut schlagartig verkippen würde. Beispielsweise auf Paletten abgelegte Bleche können daher bei Anwendung des erfindungsgemäßen Verfahrens auch beim Einlagern und bei dem zu diesem Zweck erforderlichen Transfer von dem Auflager der Beschickungseinrichtung zu dem Lager ihre Position auf der Palette unverändert beibehalten.

Mit der erfindungsgemäßen Hubbewegung des Auflagers der Entnahmeeinrichtung sowie mit der erfindungsgemäßen Absenkbewegung des Auflagers der Beschickungseinrichtung wird die lastbedingte Beweglichkeit des jeweiligen Auflagers in vertikaler Richtung überkompensiert. Als Gründe für die im Falle der Erfindung berücksichtigte vertikale Verlagerung des Auflagers der Entnahmeeinrichtung bzw. des Auflagers der Beschickungseinrichtung kommen beispielsweise lastabhängige Längenänderungen oder sonstige lastabhängige Toleranzen im Antriebsstrang der Auflager in Frage. So sind beispielsweise Hubketten oder sonstige Hubantriebsmittel, an welchen Auflager von Entnahmeeinrichtungen und Auflager von Beschickungseinrichtungen üblicherweise bei ihren funktionsbedingten Vertikalbewegungen aufgehängt sind, bei einem Wechsel der von den Auflagern zu tragenden Lasten Längenänderungen unterworfen. Eine Entlastung der Auflager bewirkt eine Kürzung der Hubketten bzw. der sonstigen Hubantriebsmittel und somit eine entlastungsbedingte Hubbewegung der Auflager. Eine Lastzunahme führt zu einer Längung der Hubketten bzw. der Hubantriebsmittel und damit zu einer Absenkbewegung der Auflager.

Mittels der erfindungsgemäßen Hubbewegung sowie mittels der erfindungsgemäßen Absenkbewegung während des Lagergut-Transfers wird den beschriebenen antriebstechnischen Erscheinungen Rechnung getragen. Die Erfindung bietet unter anderem die Möglichkeit, ohne Beeinträchtigung der Funktionssicherheit des Lagergut-Transfers für den Hubantrieb des Auflagers der Entnahmeeinrichtung und/oder für den Hubantrieb des Auflagers der Beschickungseinrichtung Antriebsmittel, beispielsweise Hubketten, zu verwenden, an denen bei Laständerungen verhältnismäßig starke Längenänderungen auftreten.

Besondere Ausführungsarten der in den unabhängigen Patentansprüchen beschriebenen Erfindungen ergeben sich aus den abhängigen Patentansprüchen.

Gemäß den Patentansprüchen 2, 4, 9 und 11 sind in vorteilhafter Ausgestaltung der Erfindung die während des Lagergut-Transfers ausgeführten Vertikalbewegungen des Auflagers der Entnahmeeinrichtung sowie des Auflagers der Beschickungseinrichtung zeitlich parallelisiert mit einer Auslagerungs- bzw. einer Einlagerungsbewegung des betreffenden Lagergutes zwischen dem Lager und der Entnahmeeinrichtung bzw. zwischen der Beschickungseinrichtung und dem Lager. Die erfindungsgemäßen Verfahren sowie die erfindungsgemäßen Lageranordnungen zeichnen sich folglich durch eine besondere Dynamik und damit durch eine hohe Geschwindigkeit beim Aus- und beim Einlagern von Lagergut aus.

Im Interesse einer möglichst einfachen Steuerung der Verfahrensabläufe sind die kennzeichnenden Verfahrensmerkmale der Patentansprüche 6 und 7 vorgesehen.

Gemäß Patentanspruch 6 wird das Maß, um welches das Auflager der Entnahmeeinrichtung gemeinsam mit dem Lagergut angehoben wird und/oder das Maß, um welches das Auflager der Beschickungseinrichtung gemeinsam mit dem Lagergut abgesenkt wird, empirisch ermittelt. Aufwändige theoretische Überlegungen zur Bemessung des Betrages der gemeinsamen Hubbewegung des Auflagers der Entnahmeeinrichtung und des Lagergutes bzw. zur Bemessung des Betrages der gemeinsamen Absenkbewegung des Auflagers der Beschickungseinrichtung und des Lagergutes erübrigen sich.

Wird als Maß, um welches das Auflager der Entnahmeeinrichtung gemeinsam mit dem Lagergut angehoben wird und/oder als Maß, um welches das Auflager der Beschickungseinrichtung gemeinsam mit dem Lagergut abgesenkt wird, eine von der Last des im Einzelfall zu transferierenden Lagergutes unabhängige Konstante vorgesehen (Patentanspruch 7), so ist eine aufwändige einzelfallabhängige Bestimmung der in Rede stehenden Größen verzichtbar. In einer numerischen Hubantriebssteuerung der erfindungsgemäßen Entnahmeeinrichtung und/oder der erfindungsgemäßen Beschickungseinrichtung kann die ermittelte Konstante einmalig hinterlegt werden.

Nachstehend wird die Erfindung anhand beispielhafter schematischer Darstellungen näher erläutert. Es zeigen:
- Fig. 1: eine Lageranordnung in Form eines Regallagers mit einem Regal sowie mit einem als Entnahmeeinrichtung sowie als Beschickungseinrichtung fungierenden Regalbediengerät,
- Fig. 2:: das Detail II in Figur 1,
- Fign. 3 bis 8:: Darstellungen zur Veranschaulichung eines Auslagerungsvorganges an der Lageranordnung gemäß Figur 1 und
- Fign. 9 bis 12:: Darstellungen zur Veranschaulichung eines Einlagerungsvorganges an der Lageranordnung gemäß Figur 1.

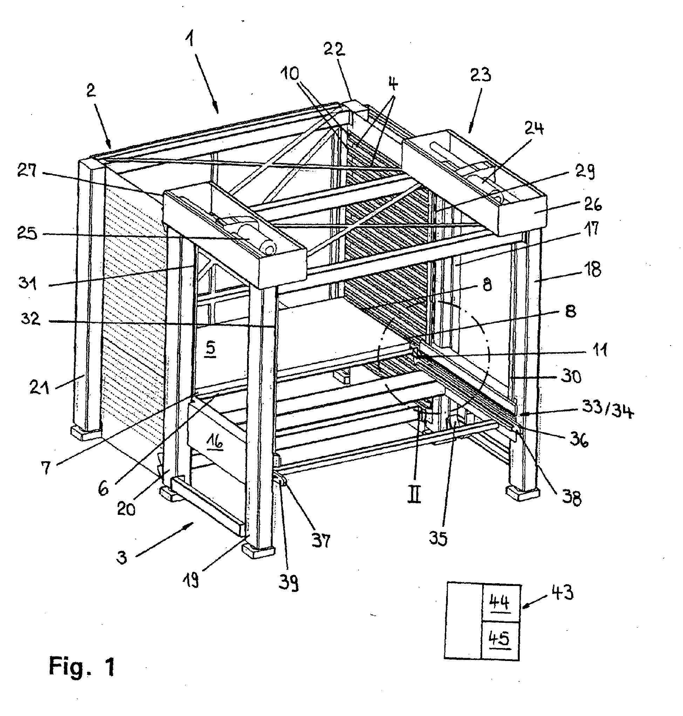

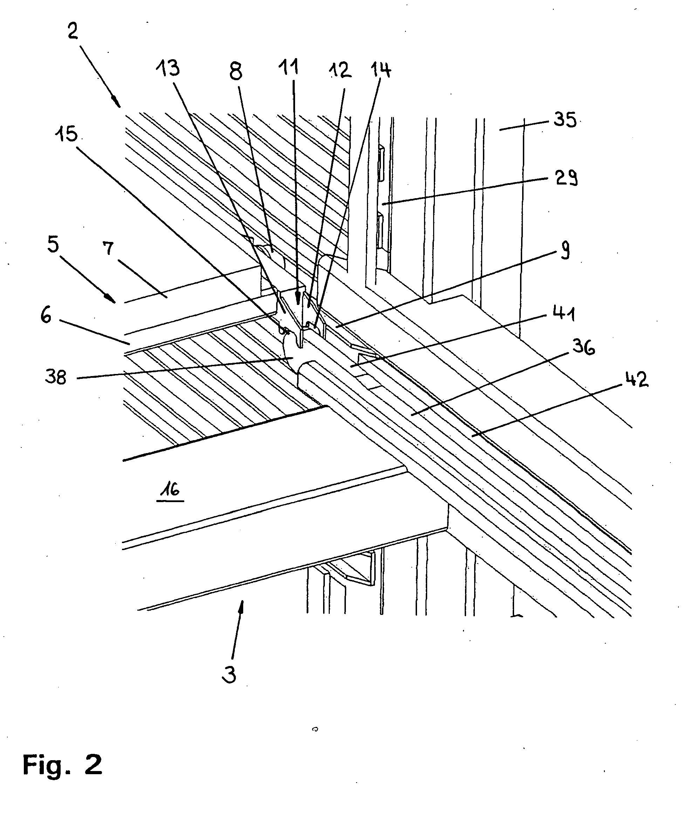

Gemäß den Figuren 1 und 2 umfasst eine als Regallager 1 ausgeführte Lageranordnung ein Lager in Form eines Regals 2 sowie ein Regalbediehgerät 3. Bei dem Regal 2 handelt es sich um ein Palettenregal mit in vertikaler Richtung übereinander angeordneten Lagerplätzen 4 für Lagergut 5. Als Lagergut 5 zeigt Figur 1 beispielhaft eine einzelne als Rollenpalette ausgebildete Palette 6 mit einem darauf abgelegten, stark schematisiert dargestellten Blechstapel 7.

In gewohnter Weise ist die Palette 6 mit seitlichen Rollen 8 versehen, von denen in Figur 1 die Rollen 8 an einer der beiden kurzen Seiten der Palette 6 andeutungsweise zu erkennen sind. Mit den Rollen 8 ruht die Palette 6 auf einer lagerseitigen Auflagerfläche 9 (Figur 2). Diese ist an der Oberseite zweier in horizontaler Richtung verlaufender Trag- und Führungsprofile 10 für die Palette 6 angeordnet. Die Trag- und Führungsprofile 10 eines Lagerplatzes 4 sind an dem Regal 2 einander gegenüberliegend montiert. In Figur 1 erkennbar sind die Trag- und Führungsprofile 10 an einer Seite des Regals 2.

An ihrer zu dem Regalbediengerät 3 hin liegenden Längsseite ist die Palette 6 mit zwei Mitnehmereingriffen 11 versehen. Auch von den Mitnehmereingriffen 11 zeigt Figur 1 lediglich einen einzigen. Der zweite Mitnehmereingriff 11 ist an der in Figur 1 verdeckten vorderen Ecke der Palette 6 angebracht. Wie Figur 2 im Einzelnen entnommen werden kann, umfasst jeder Mitnehmereingriff 11 zwei voneinander beabstandete Mitnehmerlaschen 12, 13 die ihrerseits mit Eingriffsaussparungen 14, 15 versehen sind.

Das Regalbediengerät 3 dient beim Auslagern von Lagergut 5 an dem Regal 2 als Entnahmeeinrichtung und beim Einlagern von Lagergut 5 an dem Regal 2 als Beschickungseinrichtung. Eine bühnenartige Tragstruktur 16 des Regalbediengerätes 3 ist an Stützen 17, 18, 19, 20 des Regalbediengerätes 3 in vertikaler Richtung verfahrbar. Die Stützen 17, 20 des Regalbediengerätes 3 bilden gleichzeitig Stützen des Regals 2. Das Regal 2 verfügt zusätzlich über Stützen 21, 22. Denkbar ist die Nutzung des Regalbediengerätes 3 auch zum Ein- und Auslagern von Lagergut an einem weiteren, in Figur 1 nicht gezeigten Regal, welches sich mit dem Regalbediengerät 3 die Stützen 18, 19 teilt.

Bei ihrer Verfahrbewegung in vertikaler Richtung wird die bühnenartige Tragstruktur 16 des Regalbediengerätes 3 von einem motorischen Hubantrieb 23 angetrieben. Der Hubantrieb 23 umfasst zwei elektrische Hubantriebsmotoren 24, 25, die in ihrer Drehrichtung umschaltbar sind. Die elektrischen Hubantriebsmotoren 24, 25 sind an horizontalen Riegeln 26, 27 gelagert, die ihrerseits quer zu den vertikalen Stützen 17, 18; 19, 20 des Regalbediengerätes 3 verlaufen.

Hubantriebsmittel, im gezeigten Beispielsfall vier Hubketten 29, 30, 31, 32 stellen eine Antriebsverbindung zwischen den Hubantriebsmotoren 24, 25 einerseits und der bühnenartigen Tragstruktur 16 des Regalbediengerätes 3 andererseits her. Die Hubketten 29, 30 sind dem Hubantriebsmotor 24, die Hubketten 31, 32 dem Hubantriebsmotor 25 zugeordnet. Sämtliche Hubketten 29, 30, 31, 32 werden über nicht gezeigte, von den Hubantriebsmotoren 24, 25 angetriebene Kettenräder geführt. In Abhängigkeit von der Drehrichtung der Hubantriebsmotoren 24, 25 wird die bühnenartige Tragstruktur 16 mittels der Hubketten 29, 30, 31, 32 in Schwerkraftrichtung abgesenkt oder in Gegenrichtung angehoben.

Die bühnenartige Tragstruktur 16 lagert eine Transfereinrichtung 33. Diese umfasst einen Transferantrieb 34. Bestandteil des Transferantriebes 34 ist zum einen ein in den Abbildungen verdeckt liegender elektrischer Antriebsmotor, der gleichfalls in seiner Drehrichtung umschaltbar ist und der an im Innern einer Schleppkette 35 untergebrachte Versorgungs- und Steuerleitungen angeschlossen ist. Als weitere Komponenten des Transferantriebes 34 sind zwei Transferantriebsmittel, im gezeigten Beispielsfall zwei in den Abbildungen nur angedeutete Transferketten 36, 37 vorgesehen. Die Transferketten 36, 37 laufen an Kettenführurigen 38, 39 der bühnenartigen Tragstruktur 16 endlos um.

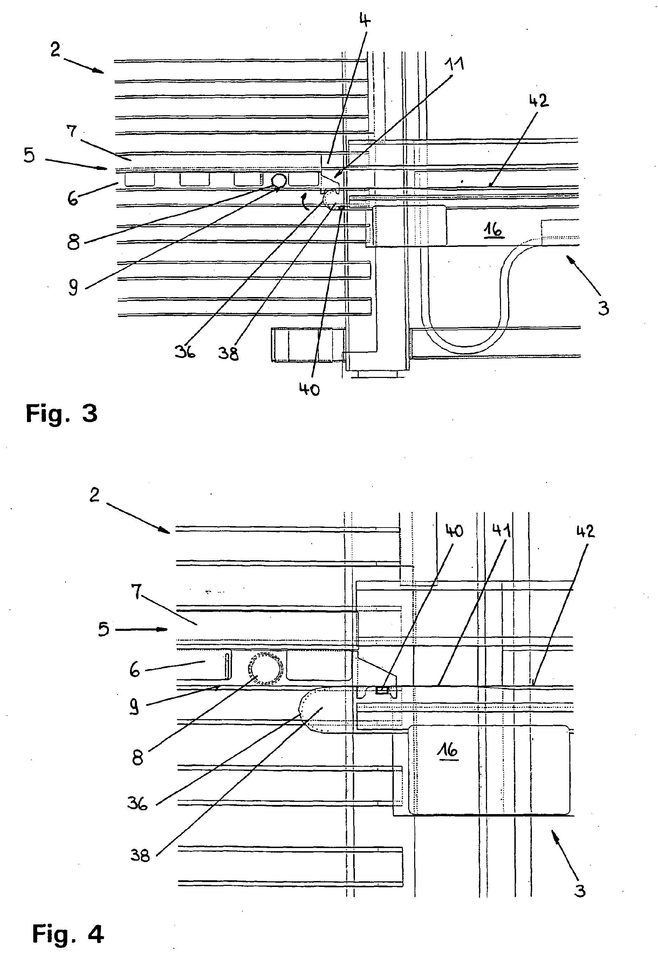

Beide Transferketten 36, 37 sind mit einem Mitnehmer versehen, der jeweils einem der Mitnehmereingriffe 11 an der in Figur 1 vorderen Längsseite der Palette 6 zugeordnet ist. Ein Mitnehmer 40 an der Transferkette 36 ist u.a. in den Figuren 3 und 4 dargestellt. Er ragt sowohl an der dem Betrachter der genannten Figuren zugewandten Seite als auch an der gegenüberliegenden Seite von der Kettenführung 38 vor.

Wie beispielsweise aus Figur 2 hervorgeht, ist die Transferkette 36 ausgehend von ihrer zu dem Regal 2 hin liegenden Umlenkung über eine Teillänge gegenüber der Kettenführung 38 erhöht. Der Bereich der Erhöhung der Transferkette 36 ist mit dem Bezugszeichen "41" versehen.

Beispielsweise Figur 2 zeigt an der bühnenartigen Tragstruktur 16 längs der Kettenführung 38 eine bediengerätseitige Auflagerfläche 42 für die Rollen 8 der Palette 6. Die Kettenführung 38 steht gegenüber der bediengerätseitigen Auflagerfläche 42 für die Rollen 8 zu dem Regal 2 hin vor und überlappt an ihrem Überstand mit dem zur Lagerung der Palette 6 dienenden Trag- und Führungsprofil 10 an dem Regal 2. Die an der Kettenführung 38 vorgesehene Erhöhung 41 der Transferkette 36 erstreckt sich längs der einander zugewandten Endbereiche der betreffenden lagerseitigen Auflagerfläche 9 und der bediengerätseitigen Auflagerfläche 42 und überbrückt den zwischen diesen Flächen verbleibenden Spalt. Die Erhöhung 41 der Transferkette 36 fluchtet mit der bediengerätseitigen Auflagerfläche 42 für die Rollen 8 der Palette 6. In dem sich an die Erhöhung 41 anschließenden Bereich liegt die Oberseite der Transferkette 36 geringfügig unterhalb der bediengerätseitigen Auflagerfläche 42. Entsprechend stellen sich die in den Abbildungen nicht erkennbaren Verhältnisse an der Kettenführung 39 dar.

Die wesentlichen Funktionen des Regallagers 1 sind numerisch gesteuert. Zu diesem Zweck dient eine numerische Anordnungssteuerung 43, in die unter anderem eine Hubantriebssteuerung 44 für den Hubantrieb 23 sowie eine Transferantriebsteuerung 45 für den Transferantrieb 34 des Regalbediengerätes 3 integriert sind.

Auslagerungsvorgänge an dem Regal 2 laufen ausweislich der Figuren 3 bis 8 wie folgt ab:
In Figur 3 ist das Lagergut 5, d.h. die Palette 6 mit dem Blechstapel 7, an dem betreffenden Lagerplatz 4 des Regals 2 eingelagert. Die Rollen 8 der Palette 6 ruhen auf der lagerseitigen Auflagerfläche 9. Dementsprechend ist das eingelagerte Lagergut 5 in Schwerkraftrichtung ausschließlich lagerseitig abgestützt.
Das Regalbediengerät 3 befindet sich mit der bühnenartigen Tragstruktur 16 in einer vertikalen Ausgangsposition, in welcher die lagerseitige Auflagerfläche 9 in horizontaler Richtung mit der bediengerätseitigen Auflagerfläche 42 fluchtet.

In die vertikale Ausgangsposition wird die bühnenartige Tragstruktur 16 mittels des Hubantriebes 23 des Regalbediengerätes 3 bewegt. Diese Positionierung der bühnenartigen Tragstruktur 16 wird von der Hubantriebssteuerung 44 der numerischen Anordnungssteuerung 43 gesteuert. Bei der Hubantriebssteuerung 44 handelt es sich um eine programmierbare Steuerung, in welcher die Positionen der Lagerplätze 4 des Regals 2 hinterlegt werden. Beim Anfahren des betreffenden Lagerplatzes 4 wird die Position der bühnenartigen Tragstruktur 16 des Regalbediengerätes 3 über einen Geber ermittelt und die Drehbewegungen der elektrischen Hubantriebsmotoren 24, 25 werden entsprechend gesteuert.

Nimmt die bühnenartige Tragstruktur 16 die in Figur 3 dargestellte vertikale Ausgangsposition ein, so ragt das in Figur 3 linke Ende der Kettenführung 38 in den Zwischenraum zwischen den Mitnehmerlaschen 12, 13 des palettenseitigen Mitnehmereingriffes 11. Der Transferantriebsmotor des Transferantriebes 34 steht still. Gleiches gilt dementsprechend für die Transferkette 36. Der Mitnehmer 40 an der Transferkette 36 ist in eine Position verfahren, in welcher er das Einfahren der Kettenführung 38 zwischen die Mitnehmerlaschen 12, 13 des palettenseitigen Mitnehmereingriffes 11 nicht behindert.

Ausgehend von den Verhältnissen gemäß Figur 3 wird der Transferantrieb 34 in Gang gesetzt. Von der Transferantriebssteuerung 45 gesteuert bewegt der Transferantriebsmotor des Transferantriebes 34 die Transferkette 36 in Richtung eines in Figur 3 dargestellten Pfeiles an der Kettenführung 38 entlang. Der an der Transferkette 36 angebrachte Mitnehmer 40 läuft dabei in die Eingriffsaussparungen 14, 15 der palettenseitigen Mitnehmerlaschen 12, 13 ein. Nun wird eine der Einfachheit halber nicht gezeigte Verriegelung der Palette 6 gelöst und die Transferkette 36 nimmt die Palette 6 und damit das gesamte Lagergut 5 in Figur 3 nach rechts mit.

Ausweislich Figur 4 wird die Palette 6 zunächst mit der Unterseite über die von der Transferkette 36 an der Kettenführung 38 ausgebildete Erhöhung 41 gezogen. Es ergibt sich dadurch ein unmittelbarer, aber druckloser Kontakt zwischen der Oberseite der Erhöhung 41 an der Kettenführung 38 und dem der Erhöhung 41 gegenüberliegenden Bereich an der Unterseite der Palette 6. Denkbar ist auch ein geringfügiger Abstand zwischen der Erhöhung 41 und der Palettenunterseite. Nach wie vor wird die in Schwerkraftrichtung wirkende Last des Lagergutes 5 ausschließlich lagerseitig aufgenommen und dort über die Rollen 8 der Palette 6 eingeleitet. Sämtliche Rollen 8 der Palette 6 stützen sich weiterhin auf der lagerseitigen Auflagerfläche 9 in Schwerkraftrichtung ab. Das Lagergut 5 befindet sich mit teilweiser Überdeckung quer zu der Schwerkraftrichtung über der Kettenführung 38 des Regalbediengerätes 3, im Einzelnen über der Erhöhung 41 an der Kettenführung 38.

Sobald der Betriebszustand gemäß Figur 4 erreicht ist, wird die bühnenartige Tragstruktur 16 des Regalbediengerätes 3 und damit auch dessen Kettenführung 38 sowie der von der Kettenführung 38 unterfangene Rand der Palette 6 bzw. des Lagergutes 5 angehoben. Dadurch wird ein Teil der in Schwerkraftrichtung wirkenden Last des Lagergutes 5 von der Kettenführung 38 und damit von der bühnenartigen Tragstruktur 16 des Regalbediengerätes 3 übernommen. Die zu dem Regalbediengerät 3 hin liegenden Rollen 8 der Palette 6 werden von der lagerseitigen Auflagerfläche 9 abgehoben. Das Lagergut 5 wird nun sowohl über die ein Auflager des Regalbediengerätes 3 ausbildende bühnenartige Tragstruktur 16 als auch lagerseitig in Schwerkraftrichtung abgestützt.

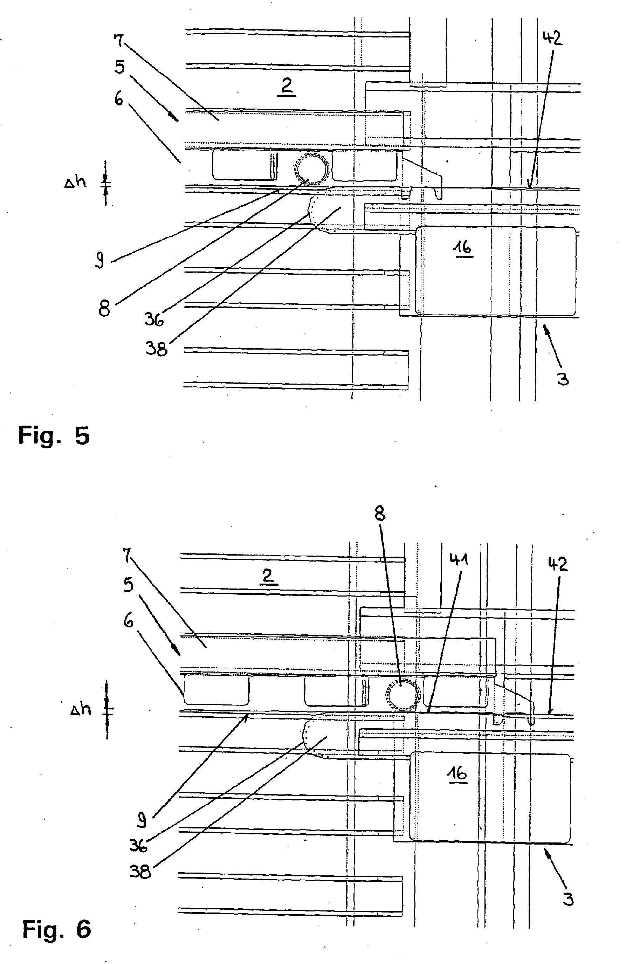

Der Betrag Δh der Hubbewegung der Kettenführung 38 (Figur 5) ergibt sich aufgrund empirischer Betrachtungen. Bei der Definition des betreffenden Steuerwertes der Hubantriebssteuerung 44 wird berücksichtigt, dass sich die Hubketten 29, 30, 31, 32 unter der Wirkung der von ihnen zu übernehmenden Teillast des Lagergutes 5 längen. Der letztlich in der Hubantriebssteuerung 44 hinterlegte Steuerwert wird derart gewählt, das sich ungeachtet der lastbedingten Nachgiebigkeit der Hubketten 29, 30, 31, 32 und der bühnenartigen Tragstruktur 16 des Regalbediengerätes 3 zwischen der lagerseitigen Auflagerfläche 9 und der bediengerätseitigen Auflagerfläche 42 der dargestellte Versatz Δh ergibt.

Zeitgleich mit der Hubbewegung der bühnenartigen Tragstruktur 16 wird die Transferkette 36 mittels des Transferantriebes 34 mit einer Auslagerungsbewegung weiterbewegt. Dadurch wird das an dem bediengerätseitigen Rand angehobene Lagergut 5 mehr und mehr auf die bühnenartige Tragstruktur 16 gezogen. Momentaufnahmen der Bewegung des Lagergutes 5 zeigen die Figuren 5, 6 und 7.

In Figur 5 liegen die bediengerätseitigen Rollen 8 der Palette 6 noch oberhalb der lagerseitigen Auflagerfläche 9. Die nicht zu erkennenden Rollen 8 nahe der linken Längsseite der Palette 8 stützen sich auf der lagerseitigen Auflagerfläche 9 ab.

In Figur 6 ist die Auslagerungsbewegung des Lagergutes 5 weiter fortgeschritten. Die bediengerätseitigen Rollen 8 der Palette 6 befinden sich nun in dem Übergangsbereich zwischen der lagerseitigen Auflagerfläche 9 und der bediengerätseitigen Auflagerfläche 42. Die seitlich neben dem Spalt zwischen der lagerseitigen Auflagerfläche 9 und der bediengerätseitigen Auflagerfläche 42 angeordnete Kettenführung 38 lagert die Palette 6 über die von der Transferkette 36 ausgebildete Erhöhung 41. Bei auf der Erhöhung 41 an der Kettenführung 38 gelagerter Palette 6 bewegen sich die bediengerätseitigen Rollen 8 der Palette 6 über den Spalt zwischen der lagerseitigen Auflagerfläche 9 und der bediengerätseitigen Auflagerfläche 42 hinweg. Auf diese Art und Weise können die bediengerätseitigen Rollen 8 der Palette 6 weitestgehend stoßfrei auf die bediengerätseitige Auflagerfläche 42 gelangen. Sobald die bediengerätseitigen Rollen 8 der Palette 6 über der bediengerätseitigen Auflagerfläche 42 zu liegen kommen, wird die bühnenartige Tragstruktur 16 des Regalbediengerätes 3 gemeinsam mit der von ihr unterfangenen Palette 6 aus der erhöhten Position gemäß den Figuren 5, 6 in die Ausgangsposition abgesenkt. Dadurch schwenkt die Palette 6 aus ihrer bei angehobener bühnenartiger Tragstruktur 16 leicht geneigten Stellung zurück in die horizontale Stellung. Bei horizontal ausgerichteter Palette 6 liegt die Erhöhung 41 an der Kettenführung 38 wieder drucklos an der Palettenunterseite an. Die in Richtung der Auslagerungsbewegung voreilenden Rollen 8 der Palette 6 setzen auf der bediengerätseitigen Auflagerfläche 42, auf. Der von dem Regalbediengerät 3 übernommene Anteil der in Schwerkraftrichtung wirkenden Last des Lagergutes 5 wird nun über die bediengerätseitigen Rollen 8 der Palette 6 und die bediengerätseitige Auflagerfläche 42 in die bühnenartige Tragstruktur 16 des Regalbediengerätes 3 abgetragen.

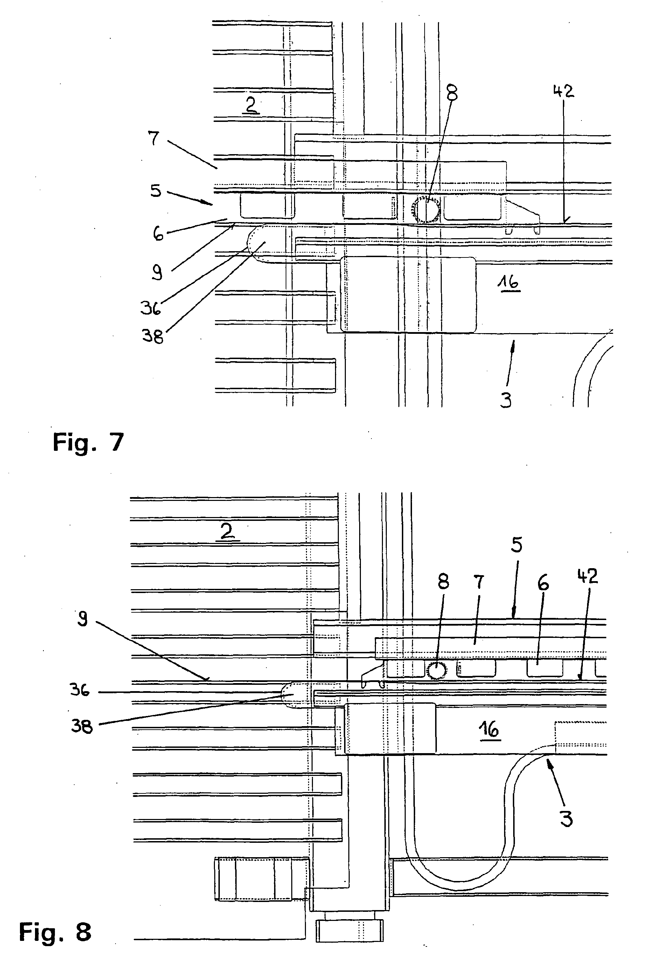

Figur 7 zeigt die Anordnung zu einem Zeitpunkt, zu welchem die bühnenartige Tragstruktur 16 des Regalbediengerätes 3 wieder in die Ausgangsposition abgesenkt und bereits ein verhältnismäßig großer Teil des Lagergutes 5 über der bühnenartigen Tragstruktur 16 des Regalbediengerätes 3 angeordnet ist. Die in der Abbildung nicht erkennbaren Rollen 8 an dem linken Rand der Palette 6 sitzen nach wie vor auf der lagerseitigen Auflagerfläche 9 des Regals 2 auf.

Im weiteren Verlauf der Auslagerungsbewegung gelangen auch die letztgenannten Rollen 8 der Palette 6 an das bediengerätseitige Ende der lagerseitigen Auflagerfläche 9. Es wird dann entsprechend den vorstehend beschriebenen Abläufen verfahren. D.h. die bühnenartige Tragstruktur 16 wird bei gleichzeitiger Auslagerungsbewegung der Palette 6 gemeinsam mit dem Lagergut 5 angehoben. Der Betrag dieser Hubbewegung wird gleichfalls empirisch ermittelt. Er kann mit dem Maß Δh der Figuren 5 und 6 übereinstimmen aber auch davon verschieden sein. Aufgrund der Aufwärtsbewegung der bühnenartigen Tragstruktur 16 heben die in Richtung der Auslagerungsbewegung nacheilenden Rollen 8 der Palette 6 von der lagerseitigen Auflagerfläche 9 ab und die Abstützung des Lagergutes 5 in Schwerkraftrichtung wird vollständig von der bühnenartigen Tragstruktur 16 des Regalbediengerätes 3 übernommen. Sobald die nacheilenden Rollen 8 der weiter in Auslagerungsrichtung bewegten Palette 6 bei auf der Erhöhung 41 der Kettenführung 38 aufliegender Palette 6 den Spalt zwischen der lagerseitigen Auflagerfläche 9 und der bediengerätseitigen Auflagerfläche 42 passiert haben und dann auf die bediengerätseitige Auflagerfläche 42 gelangt sind, wird die bühnenartige Tragstruktur 16 in die Ausgangsposition abgesenkt. Es ergeben sich damit die Verhältnisse gemäß Figur 8. Die Auslagerung des Lagergutes 5 ist abgeschlossen.

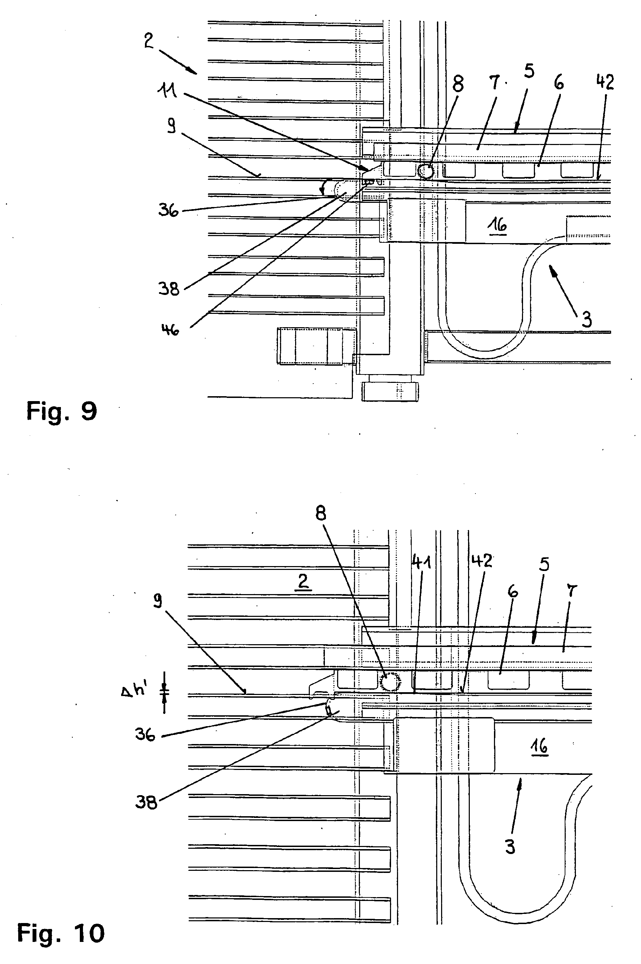

Der Ablauf von Einlagerungsvorgängen an dem Regal 2 ergibt sich aus den Figuren 9 bis 12.

Gemäß Figur 9 ist das Lagergut 5 in Schwerkraftrichtung vollständig an der in die Ausgangsposition bewegten bühnenartigen Tragstruktur 16 des Regalbediengerätes 3 abgestützt. Sämtliche Rollen 8 der Palette 6 ruhen auf der bediengerätseitigen Auflagerfläche 42. Diese fluchtet in horizontaler Richtung mit der lagerseitigen Auflagerfläche 9 für die Palette 6. An der in den Abbildungen nicht erkennbaren rechten Seite der Palette 6 greift die Transferkette 36 mit dem Mitnehmer 40 in die Eingriffsaussparungen 14, 15 des Mitnehmereingriffes 11 ein. Ein weiterer Mitnehmer 46 der Transferkette 36 liegt an der in Figur 9 linken Seite der Palette 6 im Innern eines dort vorgesehenen weiteren Mitnehmereingriffs 11. Von der Transferantriebssteuerung 45 gesteuert bewegt der Transferantriebsmotor des Transferantriebes 34 das Ladegut 5 ausgehend von seiner Position gemäß Figur 9 mit einer Einlagerungsbewegung nach links. Die Umlaufrichtung der Transferkette 36 ist in Figur 9 durch einen Pfeil dargestellt.

Aus der Ausgangsposition gemäß Figur 9 wird die bediengerätseitige Tragstruktur 16 gemeinsam mit dem von ihr in Schwerkraftrichtung vollständig gelagerten Lagergut 5 um das Maß Δh' angehoben. Gleichzeitig wird das Lagergut 5 mit einer Einlagerungsbewegung zu dem Regal 2 bewegt. Das gleichfalls empirisch ermittelte Maß Δh' beim Einlagern des Lagergutes 5 ist in dem dargestellten Beispielsfall von dem Maß Δh beim Auslagern (Figuren 5, 6) geringfügig verschieden. Es kann aber auch damit übereinstimmen.

Im Laufe der Bewegung des Lagergutes 5 zu dem Regal 2 hin gelangen die lagerseitigen Rollen 8 der Palette 6 auf Höhe des Spaltes zwischen der bediengerätseitigen Auflagerfläche 42 und der lagerseitigen Auflagerfläche 9 (Figur 10).

Unter Sicherung eines stoßfreien Überganges der Rollen 8 von der bediengerätseitigen Auflagerfläche 42 auf die lagerseitige Auflagerfläche 9 werden die lagerseitigen Rollen 8 der Palette 6 bei auf der Erhöhung 41 an der Kettenführung 38 aufliegender Palette 6 über den genannten Spalt hinweg bewegt.

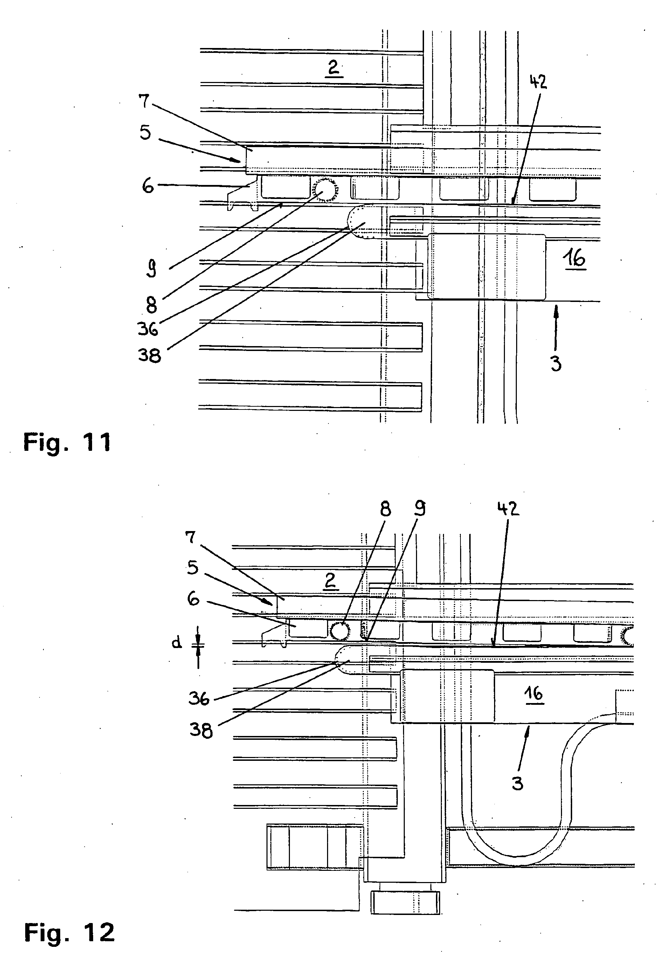

Sobald die lagerseitigen Rollen 8 über der lagerseitigen Auflagerfläche 9 zu liegen kommen, wird die bühnenartige Tragstruktur 16 in ihre Ausgangsposition abgesenkt, so dass die lagerseitigen Rollen 8 der Palette 6 von oben her auf der lagerseitigen Auflagerfläche 9 aufsetzen (Figur 11). Nun wird die Abstützung des Lagergutes 5 in Schwerkraftrichtung zum Teil von dem Regal 2 übernommen. Das Höhenprofil der Einlagerungsbewegung entspricht in seinem grundsätzlichen Verlauf dem Höhenprofil der Auslagerungsbewegung des Lagergutes 5. Unterschiede können bezüglich des Betrages der ausgeführten Hubbewegungen bestehen.

Hätte sich die bühnenartige Tragstruktur 16 beim Transfer der lagerseitigen Rollen 8 der Palette 6 auf die regalseitige Auflagerfläche 9 bereits auf ihrem Ausgangsniveau befunden, so hätte sich mit Wirksamwerden der lagerseitigen Teilabstützung des Lagergutes 5 und mit Eintreten der damit verbundenen Entlastung der bühnenartigen Tragstruktur 16 und der diese lagernden Hubketten 29, 30, 31, 32 infolge der entlastungsbedingten Kürzung der Hubketten 29, 30, 31, 32 eine schlagartige Aufwärtsbewegung der bühnenartigen Tragstruktur 16 ergeben. Trotz ihres begrenzten Betrages hätte die schlagartige Aufwärtsbewegung der bühnenartigen Tragstruktur 16 zu einem unerwünschten Verrutschen des Blechstapels 7 auf der Palette 6 führen können.

Entsprechend dem beschriebenen Übergang der in Einlagerungsrichtung voreilenden Rollen 8 der Palette 6 von der bediengerätseitigen Auflagerfläche 42 auf die lagerseitige Auflagerfläche 9 stellen sich die Abläufe beim Transfer der in Einlagerungsrichtung nacheilenden Rollen 8 der Palette 6 dar. Der Betrag der dabei von der bühnenartigen Tragstruktur 16 mit dem von dieser in Schwerkraftrichtung teilweise abgestützten Lagergut 5 ausgeführten Hubbewegung weicht in dem gezeigten Beispielsfall von dem Maß Δh' gemäß Figur 10 geringfügig ab. Es sind aber auch übereinstimmende Beträge der Hubbewegungen denkbar. An die Hubbewegung schließt sich in gewohnter Weise eine Absenkbewegung der bühnenartigen Tragstruktur 16 auf das Ausgangsniveau an. Dabei werden die in Einlagerungsrichtung nacheilenden Rollen 8 der Palette 6 von oben her auf der lagerseitigen Auflagerfläche 9 abgesetzt. Das Lagergut 5 kann sich dabei auf dem zu dem Regal 2 hin vorragenden Überstand der Kettenführung 38 abstützen (vgl. Figur 4).

Nach dem Übergang der in Einlagerungsrichtung nacheilenden Rollen 8 der Palette 6 auf die lagerseitige Auflagerfläche 9 wird das Lagergut 5 in Schwerkraftrichtung ausschließlich lagerseitig abgestützt. Es ergeben sich abschließend die Verhältnisse gemäß Figur 3. Der Einlagerungsvorgang ist damit beendet.

Abweichend von den beschriebenen Abläufen besteht beim Einlagern des Lagergutes 5 die Möglichkeit, die bühnenartige Tragstruktur 16 des Regalbediengerätes 3 ausgehend von der angehobenen Position auf ein Niveau abzusenken, das geringfügig unterhalb ihrer Ausgangsposition liegt (Maß "d" in Figur 12).

## Patentansprüche

1. Verfahren zum Auslagern von Lagergut (5) an einem Lager (2),
• wobei das auszulagernde Lagergut (5) lagerseitig und das ausgelagerte Lagergut (5) durch ein bei Lastzunahme in Schwerkraftrichtung begrenzt nachgiebiges Auflager (16) einer Entnahmeeinrichtung (3) in Schwerkraftrichtung abgestützt wird und
• wobei beim Auslagern das Lagergut (5) und das Auflager (16) der Entnahmeeinrichtung (3) quer zu der Schwerkraftrichtung relativ zueinander mit einer Auslagerungsbewegung bewegt werden unter Übernahme von in Schwerkraftrichtung wirksamer lagerseitiger Abstützung des Lagergutes (5) durch das Auflager (16) der Entnahmeeinrichtung (3),
**dadurch gekennzeichnet, dass**
das lagerseitig in Schwerkraftrichtung abgestützte Lagergut (5) und das Auflager (16) der Entnahmeeinrichtung (3) relativ zueinander mit einer Auslagerungsbewegung bewegt werden, bis das lagerseitig in Schwerkraftrichtung abgestützte Lagergut (5) mit teilweiser Überdeckung in Richtung der Auslagerungsbewegung von dem Auflager (16) der Entnahmeeinrichtung (3) untergriffen wird, ehe das Auflager (16) der Entnahmeeinrichtung (3) gemeinsam mit dem von ihm untergriffenen Lagergut (5) unter Übernahme von in Schwerkraftrichtung wirksamer lagerseitiger Abstützung des Lagergutes (5) durch das Auflager (16) der Entnahmeeinrichtung (3) angehoben und die Auslagerungsbewegung fortgesetzt wird.

2. Verfahren nach Anspruch 1, **dadurch gekennzeichnet, dass** die Auslagerungsbewegung zeitgleich mit dem gemeinsamen Anheben des Auflagers (16) der Entnahmeeinrichtung (3) und des Lagergutes (5) fortgesetzt wird.

3. Verfahren zum Einlagern von Lagergut (5) an einem Lager (2),
• wobei das einzulagernde Lagergut (5) durch ein sich bei Entlastung begrenzt hebendes Auflager (16) einer Beschickungseinrichtung (3) und das eingelagerte Lagergut (5) lagerseitig in Schwerkraftrichtung abgestützt wird und
• wobei beim Einlagern das Lagergut (5) und das Auflager (16) der Beschickungseinrichtung (3) quer zu der Schwerkraftrichtung relativ zueinander mit einer Einlagerungsbewegung bewegt werden unter Übernahme von in Schwerkraftrichtung wirksamer auflagerseitiger Abstützung des Lagergutes (5) durch das Lager (2),
**dadurch gekennzeichnet, dass**
das auflagerseitig in Schwerkraftrichtung abgestützte Lagergut (5) und das Auflager (16) der Beschickungseinrichtung (3) relativ zueinander mit einer Einlagerungsbewegung bewegt werden, bis das auflagerseitig in Schwerkraftrichtung abgestützte Lagergut (5) mit teilweiser Überdeckung in Richtung der Einlagerungsbewegung von dem Lager (2) untergriffen wird, ehe das Auflager (16) der Beschickungseinrichtung (3) gemeinsam mit dem Lagergut (5) unter Übernahme von in Schwerkraftrichtung wirksamer auflagerseitiger Abstützung des Lagergutes (5) durch das Lager (2) abgesenkt und die Einlagerungsbewegung fortgesetzt wird.

4. Verfahren nach Anspruch 3, **dadurch gekennzeichnet, dass** die Einlagerungsbewegung zeitgleich mit dem gemeinsamen Absenken des Auflagers (16) der Beschickungseinrichtung (3) und des Lagergutes (5) fortgesetzt wird.

5. Verfahren zum Handling von Lagergut (5) an einem Lager (2), umfassend ein Verfahren zum Auslagern sowie ein Verfahren zum Einlagern von Lagergut (5), **gekennzeichnet durch** ein nach den Patentansprüchen 1 oder 2 ausgestaltetes Verfahren zum Auslagern von Lagergut (5) sowie **durch** ein nach den Patentansprüchen 3 oder 4 ausgestaltetes Verfahren zum Einlagern von Lagergut (5).

6. Verfahren nach einem der vorhergehenden Ansprüche, **dadurch gekennzeichnet, dass** das Maß, um welches das Auflager (16) der Entnahmeeinrichtung (3) gemeinsam mit dem Lagergut (5) angehoben wird und/oder das Maß, um welches das Auflager (16) der Beschickungseinrichtung (3) gemeinsam mit dem Lagergut (5) abgesenkt wird, empirisch ermittelt wird bzw. werden.

7. Verfahren nach einem der vorhergehenden Ansprüche, **dadurch gekennzeichnet, dass** als Maß, um welches das Auflager (16) der Entnahmeeinrichtung (3) gemeinsam mit dem Lagergut (5) angehoben wird und/oder als Maß, um welches das Auflager (16) der Beschickungseinrichtung (3) gemeinsam mit dem Lagergut (5) abgesenkt wird, ein bei wechselnden Lasten des Lagergutes (5) konstantes Maß vorgesehen wird bzw. werden.

8. Lageranordnung mit einem Lager (2) für Lagergut (5) sowie mit einer Entnahmeeinrichtung (3), welche
• ein in vertikaler Richtung bewegliches und bei Lastzunahme in Schwerkraftrichtung begrenzt nachgiebiges Auflager (16) für Lagergut (5),
• einen mittels einer Hubantriebssteuerung (44) steuerbaren Hubantrieb (23) für die Vertikalbewegung des Auflagers (16) der Entnahmeeinrichtung (3) sowie
• einen mittels einer Transferantriebssteuerung (45) steuerbaren Transferantrieb (34), mittels dessen ein Lagergut (5) und das Auflager (16) der Entnahmeeinrichtung (3) quer zu der Schwerkraftrichtung mit einer Auslagerungsbewegung relativ zueinander bewegbar sind,
umfasst, wobei das auszulagernde Lagergut (5) lagerseitig und das ausgelagerte Lagergut (5) durch das Auflager (16) der Entnahmeeinrichtung (3) in Schwerkraftrichtung abgestützt ist,
**dadurch gekennzeichnet, dass**
das lagerseitig in Schwerkraftrichtung abgestützte Lagergut (5) und das Auflager (16) der Entnahmeeinrichtung (3) mittels des von der Transferantriebssteuerung (45) gesteuerten Transferantriebes (34) relativ zueinander mit einer Auslagerungsbewegung bewegt werden, bis das lagerseitig in Schwerkraftrichtung abgestützte Lagergut (5) mit teilweiser Überdeckung in Richtung der Auslagerungsbewegung von dem Auflager (16) der Entnahmeeinrichtung (3) untergriffen wird, ehe das Auflager (16) der Entnahmeeinrichtung (3) gemeinsam mit dem von ihm untergriffenen Lagergut (5) mittels des von der Hubantriebssteuerung (44) gesteuerten Hubantriebes (23) der Entnahmeeinrichtung (3) unter Übernahme von in Schwerkraftrichtung wirksamer lagerseitiger Abstützung des Lagergutes (5) durch das Auflager (16) der Entnahmeeinrichtung (3) angehoben und die Auslagerungsbewegung mittels des von der Transferantriebssteuerung (45) gesteuerten Transferantriebes (34) fortgesetzt wird.

9. Lageranordnung nach Anspruch 8, **dadurch gekennzeichnet, dass** der Transferantrieb (34) der Entnahmeeinrichtung (3) und der Hubantrieb (23) der Entnahmeeinrichtung (3) mittels der Transferantriebssteuerung (45) und der Hubantriebssteuerung (44) derart aufeinander abgestimmt betrieben werden, dass die Auslagerungsbewegung zeitgleich mit dem gemeinsamen Anheben des Auflagers (16) der Entnahmeeinrichtung (3) und des Lagergutes (5) fortgesetzt wird.

10. Lageranordnung mit einem Lager (2) für Lagergut (5) sowie mit einer Beschickungseinrichtung (3), welche
• ein in vertikaler Richtung bewegliches und sich bei Entlastung begrenzt hebendes Auflager (16) für Lagergut (5),
• einen mittels einer Hubantriebssteuerung (44) steuerbaren Hubantrieb (23) für die Vertikalbewegung des Auflagers (16) der Beschickungseinrichtung (3) sowie
• einen mittels einer Transferantriebssteuerung (45) steuerbaren Transferantrieb (34), mittels dessen ein Lagergut (5) und das Auflager (16) der Beschickungseinrichtung (3) quer zu der Schwerkraftrichtung mit einer Einlagerungsbewegung relativ zueinander bewegbar sind, umfasst, wobei das einzulagernde Lagergut (5) durch das Auflager (16) der Beschickungseinrichtung (3) und das eingelagerte Lagergut (5) lagerseitig in Schwerkraftrichtung abgestützt ist,
**dadurch gekennzeichnet, dass**
das auflagerseitig in Schwerkraftrichtung abgestützte Lagergut (5) und das Auflager (16) der Beschickungseinrichtung (3) mittels des von der Transferantriebssteuerung (45) gesteuerten Transferantriebes (34) relativ zueinander mit einer Einlagerungsbewegung bewegt werden, bis das auflagerseitig in Schwerkraftrichtung abgestützte Lagergut (5) mit teilweiser Überdeckung in Richtung der Einlagerungsbewegung von dem Lager (2) untergriffen wird, ehe das Auflager (16) der Beschickungseinrichtung (3) gemeinsam mit dem von dem Lager (2) untergriffenen Lagergut (5) mittels des von der Hubantriebssteuerung (44) gesteuerten Hubantriebes (23) der Beschickungseinrichtung (3) unter Übernahme von in Schwerkraftrichtung wirksamer auflagerseitiger Abstützung des Lagergutes (5) durch das Lager (2) abgesenkt und die Einlagerungsbewegung mittels des von der Transferantriebssteuerung (45) gesteuerten Transferantriebes (34) fortgesetzt wird.

11. Lageranordnung nach Anspruch 10, **dadurch gekennzeichnet, dass** der Transferantrieb (34) der Beschickungseinrichtung (3) und der Hubantrieb (23) der Beschickungseinrichtung (3) mittels der Transferantriebssteuerung (45) und der Hubantriebssteuerung (44) derart aufeinander abgestimmt betrieben werden, dass die Einlagerungsbewegung zeitgleich mit dem gemeinsamen Absenken des Auflagers (16) der Beschickungseinrichtung (3) und des Lagergutes (5) fortgesetzt wird.

12. Lageranordnung mit einem Lager (2) für Lagergut (5) sowie mit einer Entnahmeeinrichtung (3) und einer Beschickungseinrichtung (3), **gekennzeichnet durch** eine Entnahmeeinrichtung (3) gemäß Anspruch 8 oder Anspruch 9 sowie **durch** eine Beschickungseinrichtung (3) gemäß Anspruch 10 oder Anspruch 11.

## Claims

1. Method for retrieving stock (5) from storage at a store (2),
• wherein the stock (5) to be retrieved from storage is supported in the direction of gravity on the store and the stock (5) retrieved from storage is supported in the direction of gravity by a support (16) of a withdrawal device (3), which support (16) is flexible to a limited extent upon an increase in load in the direction of gravity and
• wherein, when retrieving from storage, the stock (5) and the support (16) of the withdrawal device (3) are moved relative to each other transversely to the direction of gravity with a retrieval movement, with supporting of the stock (5) in the direction of gravity on the store being taken over by the support (16) of the withdrawal device (3),
**characterised in that**
the stock (5) supported in the direction of gravity on the store and the support (16) of the withdrawal device (3) are moved relative to each other with a retrieval movement until, with partial overlapping in the direction of the retrieval movement, the stock (5) supported in the direction of gravity on the store is engaged from below by the support (16) of the withdrawal device (3), before the support (16) of the withdrawal device (3) is raised together with the stock (5) engaged by it from below, with supporting of the stock (5) in the direction of gravity on the store being taken over by the support (16) of the withdrawal device (3), and before the retrieval movement is continued.

2. Method according to claim 1, **characterised in that** the retrieval movement is continued simultaneously with the raising of the support (16) of the withdrawal device (3) together with the stock (5).

3. Method for placing stock (5) in storage at a store (2),
• wherein the stock (5) to be placed in storage is supported in the direction of gravity by a support (16) of a charging device (3), which support (16) rises to a limited extent upon being unloaded, and the stock (5) placed in storage is supported in the direction of gravity on the store, and
• wherein, when placing in storage, the stock (5) and the support (16) of the charging device (3) are moved relative to each other transversely to the direction of gravity with a storage movement, with supporting of the stock (5) in the direction of gravity on the support being taken over by the store (2),
**characterised in that**
the stock (5) supported in the direction of gravity on the support and the support (16) of the charging device (3) are moved relative to each other with a storage movement until, with partial overlapping in the direction of the storage movement, the stock (5) supported in the direction of gravity on the support is engaged from below by the store (2), before the support (16) of the charging device (3) is lowered together with the stock (5), with supporting of the stock (5) in the direction of gravity on the support being taken over by the store (2), and before the storage movement is continued.

4. Method according to claim 3, **characterised in that** the storage movement is continued simultaneously with the lowering of the support (16) of the charging device (3) together with the stock (5).

5. Method for handling stock (5) at a store (2), comprising a method for retrieving stock (5) from storage and a method for placing stock (5) in storage, **characterised by** a method for retrieving stock (5) from storage in accordance with patent claim 1 or 2 and by a method for placing stock (5) in storage in accordance with patent claim 3 or 4.

6. Method according to any one of the preceding claims, **characterised in that** the amount by which the support (16) of the retrieval device (3) is raised together with the stock (5) and/or the amount by which the support (16) of the charging device (3) is lowered together with the stock (5) are/is determined empirically.

7. Method according to any one of the preceding claims, **characterised in that** there is provided as the amount by which the support (16) of the withdrawal device (3) is raised together with the stock (5) and/or as the amount by which the support (16) of the charging device (3) is lowered together with the stock (5) an amount that is constant under varying loads of the stock (5).

8. Storage arrangement having a store (2) for stock (5) and having a withdrawal device (3) which comprises
• a support (16) for stock (5), which support (16) is movable in the vertical direction and is flexible to a limited extent upon an increase in load in the direction of gravity,
• a lifting drive (23) for the vertical movement of the support (16) of the withdrawal device (3), which lifting drive (23) is controllable by means of a lifting drive control (44), and
• a transfer drive (34) which is controllable by means of a transfer drive control (45) and by means of which an item of stock (5) and the support (16) of the withdrawal device (3) are movable relative to each other transversely to the direction of gravity with a retrieval movement,
the stock (5) to be retrieved from storage being supported in the direction of gravity on the store and the stock (5) retrieved from storage being supported in the direction of gravity by the support (16) of the withdrawal device (3),
**characterised in that**
the stock (5) supported in the direction of gravity on the store and the support (16) of the withdrawal device (3) are moved relative to each other with a retrieval movement by means of the transfer drive (34) controlled by the transfer drive control (45) until, with partial overlapping in the direction of the retrieval movement, the stock (5) supported in the direction of gravity on the store is engaged from below by the support (16) of the withdrawal device (3), before the support (16) of the withdrawal device (3) is raised together with the stock (5) engaged by it from below by means of the lifting drive (23) of the withdrawal device (3) controlled by the lifting drive control (44), with supporting of the stock (5) in the direction of gravity on the store being taken over by the support (16) of the withdrawal device (3), and before the retrieval movement is continued by means of the transfer drive (34) controlled by the transfer drive control (45).

9. Storage arrangement according to claim 8, **characterised in that** the transfer drive (34) of the withdrawal device (3) and the lifting drive (23) of the withdrawal device (3) are operated coordinated with each other by means of the transfer drive control (45) and the lifting drive control (44) in such a manner that the retrieval movement is continued simultaneously with the raising of the support (16) of the withdrawal device (3) together with the stock (5).

10. Storage arrangement having a store (2) for stock (5) and having a charging device (3) which comprises
• a support (16) for the stock (5), which support (16) is movable in the vertical direction and rises to a limited extent upon being unloaded,
• a lifting drive (23) for the vertical movement of the support (16) of the charging device (3), which lifting drive (23) is controllable by means of a lifting drive control (44), and
• a transfer drive (34) which is controllable by means of a transfer drive control (45) and by means of which an item of stock (5) and the support (16) of the charging device (3) are movable relative to each other transversely to the direction of gravity with a storage movement,
the stock (5) to be placed in storage being supported in the direction of gravity by the support (16) of the charging device (3) and the stock (5) placed in storage being supported in the direction of gravity on the store,
**characterised in that**
the stock (5) supported in the direction of gravity on the support and the support (16) of the charging device (3) are moved relative to each other with a storage movement by means of the transfer drive (34) controlled by the transfer drive control (45) until, with partial overlapping in the direction of the storage movement, the stock (5) supported in the direction of gravity on the support is engaged from below by the store (2), before the support (16) of the charging device (3) is lowered together with the stock (5) engaged from below by the store (2) by means of the lifting drive (23) of the charging device (3) controlled by the lifting drive control (44), with supporting of the stock (5) in the direction of gravity on the support being taken over by the store (2), and before the storage movement is continued by means of the transfer drive (34) controlled by the transfer drive control (45).

11. Storage arrangement according to claim 10, **characterised in that** the transfer drive (34) of the charging device (3) and the lifting drive (23) of the charging device (3) are operated coordinated with each other by means of the transfer drive control (45) and the lifting drive control (44) in such a manner that the storage movement is continued simultaneously with the lowering of the support (16) of the charging device (3) together with the stock (5).

12. Storage arrangement having a store (2) for stock (5) and having a withdrawal device (3) and a charging device (3), **characterised by** a withdrawal device (3) in accordance with claim 8 or claim 9 and by a charging device (3) in accordance with claim 10 or claim 11.

## Revendications

1. Procédé de déstockage d'un produit (5) stocké sur un support de stockage (2),
- sachant que, dans la direction de la pesanteur, le produit (5) à déstocker est soutenu par le support de stockage, et le produit déstocké (5) par un support (16), fléchissant dans une mesure limitée, dans la direction de la pesanteur, lors de l'augmentation de la charge, d'un dispositif d'enlèvement (3),
- et sachant que, lors du déstockage, le produit (5) et le support (16) du dispositif d'enlèvement (3) sont déplacés l'un par rapport à l'autre transversalement à la direction de la pesanteur par un mouvement de déstockage avec prise en charge par le support (16) du dispositif d'enlèvement (3) de soutien, actif dans la direction de la pesanteur, du produit (5) par le support de stockage,
**caractérisé en ce que** le produit (5) soutenu par le support de stockage dans la direction de la pesanteur et le support (16) du dispositif d'enlèvement (3) sont déplacés l'un par rapport à l'autre par un mouvement de déstockage jusqu'à ce que le produit (5) soutenu par le support de stockage dans la direction de la pesanteur soit engagée par en-dessous par le support (16) du dispositif d'enlèvement (3) avec recouvrement partiel dans la direction du mouvement de déstockage, avant que le support (16) du dispositif d'enlèvement (3) soit soulevé conjointement avec le produit (5) engagé par lui par en-dessous, avec prise en charge par le support (16) du dispositif d'enlèvement (3) de soutien, actif dans la direction de la pesanteur, du produit (5) par le support de stockage, et que le mouvement de déstockage soit poursuivi.

2. Procédé selon la revendication 1, **caractérisé en ce que** le mouvement de déstockage est poursuivi en même temps que le soulèvement conjoint du support (16) du dispositif d'enlèvement (3) et du produit (5).

3. Procédé de stockage d'un produit (5) à stocker sur un support de stockage (2),
- sachant que dans la direction de la pesanteur le produit (5) à stocker est soutenu par un support (16) d'un dispositif de chargement (3) qui s'élève dans une mesure limitée lors du soulagement de la charge, et le produit (5) stocké (5) par le support de stockage,
- et sachant que, lors du stockage, le produit (5) et le support (16) du dispositif de chargement (3) sont déplacés l'un par rapport à l'autre transversalement à la direction de la pesanteur par un mouvement de stockage avec prise en charge par le support de stockage (2) de soutien, actif dans la direction de la pesanteur, du produit (5) par le support (16),
**caractérisé en ce que** le produit (5) soutenu par le support (16) dans la direction de la pesanteur et le support (16) du dispositif de chargement (3) sont déplacés l'un par rapport à l'autre par un mouvement de stockage jusqu'à ce que le produit (5) soutenu par le support (16) dans la direction de la pesanteur soit engagée par en-dessous par le support de stockage (2) avec recouvrement partiel dans la direction du mouvement de stockage, avant que le support (16) du dispositif de chargement (3) soit abaissé conjointement avec le produit (5), avec prise en charge par le de stock (2) de soutien, actif dans la direction de la pesanteur, du produit (5) par le support (16), et que le mouvement de stockage soit poursuivi.

4. Procédé selon la revendication 3, **caractérisé en ce que** le mouvement de stockage est poursuivi en même temps que l'abaissement conjoint du support (16) du dispositif de chargement (3) et du produit (5).

5. Procédé de manipulation de produits (5) à stocker et/ou à déstocker sur un support de stockage (2), comprenant un procédé de déstockage ainsi qu'un procédé de stockage de produits (5), **caractérisé par** un procédé de déstockage de produits (5) configuré selon les revendications 1 et 2 ainsi que par un procédé de stockage de produits (5) configuré selon les revendications 3 et 4.

6. Procédé selon l'une des revendications précédentes, **caractérisé en ce que** la mesure dans laquelle le support (16) du dispositif d'enlèvement (3) est soulevé conjointement avec le produit (5) et/ou la mesure dans laquelle le support (16) du dispositif de chargement (3) est abaissé conjointement avec le produit (5) est/sont déterminée(s) de façon empirique.

7. Procédé selon l'une des revendications précédentes, **caractérisé en ce que**, comme mesure dans laquelle le support (16) du dispositif d'enlèvement (3) est soulevé conjointement avec le produit (5), et/ou comme mesure dans laquelle le support (16) du dispositif de chargement (3) est abaissé conjointement avec le produit (5), on prévoit une dimension constante lors de variations de charge du produit (5).

8. Ensemble de stockage avec un support de stockage (2) pour des produits (5) ainsi qu'avec un dispositif d'enlèvement (3) qui comprend :
- un support (16) pour des produits (5), mobile en direction verticale et fléchissant dans une mesure limitée dans la direction de la pesanteur lors de l'augmentation de la charge,
- un entraînement de levage (23), pouvant être commandé au moyen d'une commande (44) d'entraînement de levage, pour le mouvement vertical du support (16) du dispositif d'enlèvement (3), et
- un entraînement de transfert (34), pouvant être commandé au moyen d'une commande (45) d'entraînement de transfert et au moyen duquel un produit (5) et le support (16) du dispositif d'enlèvement (3) peuvent être déplacés l'un par rapport à l'autre transversalement à la direction de la pesanteur par un mouvement de déstockage,
sachant que dans la direction de la pesanteur le produit (5) à déstocker est soutenu par le support de stockage, et le produit déstocké (5) par le support (16) du dispositif d'enlèvement (3),
**caractérisé en ce que** le produit (5) soutenu par le support de stockage dans la direction de la pesanteur et le support (16) du dispositif d'enlèvement (3) sont déplacés l'un par rapport à l'autre par un mouvement de déstockage au moyen de l'entraînement de transfert (34) commandé par la commande (45) d'entraînement de transfert, jusqu'à ce que le produit (5) soutenu par le support de stockage dans la direction de la pesanteur soit engagée par en-dessous par le support (16) du dispositif d'enlèvement (3) avec recouvrement partiel dans la direction du mouvement de déstockage, avant que le support (16) du dispositif d'enlèvement (3) soit, conjointement avec le produit (5) engagé par lui par en-dessous, soulevé au moyen de l'entraînement de levage (23) commandé par la commande (44) d'entraînement de levage, avec prise en charge par le support (16) du dispositif d'enlèvement (3) de soutien, actif dans la direction de la pesanteur, du produit (5) par le support de stockage, et que le mouvement de déstockage soit poursuivi au moyen de l'entraînement de transfert (34) commandé par la commande (45) d'entraînement de transfert.

9. Ensemble de stockage selon la revendication 8, **caractérisé en ce que** l'entraînement de transfert (34) du dispositif d'enlèvement (3) et l'entraînement de levage (23) du dispositif d'enlèvement (3) sont, au moyen de la commande (45) d'entraînement de transfert et de la commande (44) d'entraînement de levage, exploités ou mis en fonctionnement en étant coordonnés de telle sorte que le mouvement de déstockage est poursuivi en même temps que le soulèvement conjoint du support (16) du dispositif d'enlèvement (3) et du produit (5).

10. Ensemble de stockage avec un support de stockage (2) pour des produits (5) ainsi qu'avec un dispositif de chargement (3) qui comprend :
- un support (16) pour des produits (5), mobile en direction verticale et s'élevant dans une mesure limitée lors du soulagement de la charge,
- un entraînement de levage (23), pouvant être commandé au moyen d'une commande (44) d'entraînement de levage, pour le mouvement vertical du support (16) du dispositif de chargement (3), et
- un entraînement de transfert (34), pouvant être commandé au moyen d'une commande (45) d'entraînement de transfert et au moyen duquel un produit (5) et le support (16) du dispositif de chargement (3) peuvent être déplacés l'un par rapport à l'autre transversalement à la direction de la pesanteur par un mouvement de stockage,
sachant que le produit (5) à stocker est soutenu dans la direction de la pesanteur par le support (16) du dispositif de chargement (3), et le produit stocké (5) par le support de stockage,
**caractérisé en ce que** le produit (5) soutenu par le support (16) dans la direction de la pesanteur et le support (16) du dispositif de chargement (3) sont déplacés l'un par rapport à l'autre par un mouvement de stockage au moyen de l'entraînement de transfert (34) commandé par la commande (45) d'entraînement de transfert, jusqu'à ce que le produit (5) soutenu par le support (16) dans la direction de la pesanteur soit engagé par en-dessous par le support de stockage (2) avec recouvrement partiel dans la direction du mouvement de stockage, avant que le support (16) du dispositif de chargement (3) soit, conjointement avec le produit (5) engagé par en-dessous par le support de stockage (2), abaissé au moyen de l'entraînement de levage (23) commandé par la commande (44) d'entraînement de levage, avec prise en charge par le support de stockage (2) de soutien, actif dans la direction de la pesanteur, du produit (5) par le support (16), et que le mouvement de stockage soit poursuivi au moyen de l'entraînement de transfert (34) commandé par la commande (45) d'entraînement de transfert.

11. Ensemble de stockage selon la revendication 10, **caractérisé en ce que** l'entraînement de transfert (34) du dispositif de chargement (3) et l'entraînement de levage (23) du dispositif de chargement (3) sont, au moyen de la commande (45) d'entraînement de transfert et de la commande (44) d'entraînement de levage, exploités ou mis en fonctionnement en étant coordonnés de telle sorte que le mouvement de stockage est poursuivi en même temps que l'abaissement conjoint du support (16) du dispositif de chargement (3) et du produit (5).

12. Ensemble de stockage avec un support de stockage (2) pour des produits (5) ainsi qu'avec un dispositif d'enlèvement (3) et un dispositif de chargement (3), **caractérisé par** un dispositif d'enlèvement (3) selon la revendication 8 ou 9 ainsi que par un dispositif de chargement (3) selon la revendication 10 ou 11.
